# EUROPEAN PATENT APPLICATION

(11) **EP 3 025 790 A1**
(43) Date of publication of application: **01.06.2016**
(21) Application number: 15196513.4
(22) Date of filing: 26.11.2015
(51) Int. Cl.: B05D 5/00, B29B 15/12, B29C 70/64, B29C 70/02, E01F 9/00

(54) **A METHOD FOR MANUFACTURING A PULTRUDED PRODUCT AND A PRODUCT OBTAINED WITH THAT METHOD**

(30) Priority: 27.11.2014 NL 2013891
(71) Applicant: Stagro Vastgoed B.V., 8281 JT Genemuiden (NL)
(72) Inventor: STAPELBROEK, Antonius Hendrikus, 8281 JT Genemuiden (NL)
(74) Representative: Plaggenborg, Menko Bernard

(57) **Abstract**

Method for manufacturing a pultruded product, comprising the steps of impregnating fibers (2, 3) with a curable resin, guiding said impregnated fibers through a mold for obtaining a molded product (8) and curing said resin of said molded product. The method is characterized in that the method further comprises the step of applying reflective objects to a non-woven material (10) and at least partly coating the impregnated fibers that are to be guided through said mold with said non-woven material, in order to obtain a pultruded product (13) comprising resin impregnated non-woven material (10) with reflective objects at at least part of its surface.

A preferred embodiment relates to a pultruded product (13) obtained with a method according to any of the preceding claims, comprising fibers that are impregnated with a cured resin and wherein an outer surface of said product comprises a non-woven material (10) that has been impregnated with said cured resin and that is provided with reflective objects that have been incorporated into said resin.

## Description

The present invention relates to a method according to the preamble of claim 1. Such method is known in the art under the term pultrusion. In pultrusion, fiber bundles are guided through a curable resin and subsequently shaped in a mold and cured. The curable resin may be a thermoplastic resin or a thermosetting resin. Furthermore, the resin may be an in an arbitrary manner polymerizable resin.

Such method is used to manufacture a wide range of products, for example profiles and the like. Specific examples are comprised of banisters and roadside poles.

A specific disadvantage of such known method is that it has proved difficult to provide the products with a finishing layer. Therefore, in practice, a paper or plastic layer is applied on the product's surface. However, same deteriorates due to weather and aging. Such covering layer also hinders the application of a print or offset finish.

The invention aims at providing an improved method of the kind mentioned in the preamble.

The invention also aims at providing a method of the kind mentioned in the preamble that allows a durable finish of products obtained with the method.

The invention especially aims at providing an improved method allowing to apply a new finish to the product.

Finally, the invention aims at providing a method allowing one to apply a reflective layer on the product.

So as to obtain at least one of these goals, according to a first embodiment the invention provides a method for manufacturing a pultruded product, comprising the steps of impregnating fibers with a curable resin, guiding said impregnated fibers through a mold for obtaining a molded product and curing said resin of said molded product, characterized in that the method further comprises the step of applying reflective objects to a non-woven material and at least partly coating the impregnated fibers that are to be guided through said mold with said non-woven material, in order to obtain a pultruded product comprising resin impregnated non-woven material with reflective objects at at least part of its surface. This method has the advantage that the finish layer, i.e. the outer surface, can be provided with a range of different appearances.

It has also shown that the method allows a product to be manufactured that comprises added materials, for example solid materials or objects, in the surface layer (i.e. in the finish). For example, reflective objects may be incorporated in the finish layer. In addition to that, the durability of the finish layer has the same durability as the complete product. Such synergetic result is a surprise.

It is especially preferred that, in the method according to the present invention, said reflective objects are applied to said non-woven material by using a carrier. Preferably, said carrier (also identified as vehicle) is compatible with said resin in a still non-cured state, for example soluble or miscible. As a consequence, the final cured product will have a consistent composition.

A first preferred embodiment is obtained by means of a method wherein said reflective objects are applied to said non-woven material by a screen printing technique with a viscous vehicle. This provides a simple and quick application of said reflective materials to said non-woven material.

A second preferred embodiment is obtained with a method wherein said reflective objects are applied to said non-woven material by using an offset cylinder and a highly viscous carrier. Such provides a high qualitative application, especially advantageous if an accurate, repeating pattern is to be applied.

A third preferred embodiment is obtained with a method wherein said reflective objects are applied to said non-woven material by using a spraying device and a liquid carrier. Such provides a quick method wherein a generally sufficiently regular density of reflective objects on the surface of the non-woven material is obtained.

Preferably, the method comprises the step of curing said composite product in the mold. As a consequence, a finished product is obtained from the mold that is cured and that may be used without further treatment, for example, it may be divided into products of desired dimension. As known in the art, pultrusion commonly applies a continuous method for manufacturing a continuous product. In that vase, curing said shaped product in the mold provides a finished product leaving the mold.

When using an offset cylinder, it is preferred for the carrier and the reflective objects that each are separately applied on the plate cylinder and that they are concurrently transferred to the offset cylinder. This provides a highest possible quality and the least risk of failures in the process.

For obtaining an optimum impregnation of the non-woven material, such that reflective objects are completely incorporated into the curable resin, it is preferred for the method to comprise the step of combining curable resin impregnated fibers and reflective objects coated non-woven material under pressure, so as to impregnate the non-woven material and the reflective objects coated thereon with said curable resin. Combining under pressure may suitably be performed in the mold.

SO as to obtain an excellent reflective effect it is preferred that said reflective objects comprise retro-reflective objects. Such objects reflect light in the direction from which it originates. Prisms and spherical objects, for example glass beads, are suitable examples for use in the method according to the invention.

Spherical objects particularly may be used in the methods mentioned above, for applying same on a non-woven material. As a consequence, a method wherein said reflective objects comprise substantially spherical objects is preferred.

The method may suitably be used for manufacturing safety products wherein a reflective effect is of importance, such as roadside bollards and railings that serve as escape route marking. Such products preferably are lightweight, since they are to be manufactured in large quantities. As a consequence, a method is preferred, comprising the step of manufacturing in a mold an at least partly hollow spherical body, said body comprising reflective objects at an outer surface.

For obtaining an optimum reflection, it is preferred for the curable resin to yield an at least partly transparent material after curing. Therefore, preferably, said curable resin yields an at least partly transparent material after curing same, preferably a material with a transparency of at least 30% for at least part of the visible light spectrum, more preferably at least 50%, still more preferably at least 70%.

Finally, the invention relates to a pultruded product that is obtained through a method according to the present invention, comprising fibers that are impregnated with a cured resin and wherein an outer surface of said product comprises a non-woven material that has been impregnated with said cured resin and that is provided with reflective objects that have been incorporated into said resin.

The method according to the present invention is substantially performed as a common pultrusion method wherein a resin impregnated fiber bundle is fed through a mold, is shaped inside said mold in a desired manner and subsequently is removed from said mold. The invention provides the additional step of applying to a non-woven material some reflective objects, for example glass beads, positioning said non-woven material around said impregnated fiber bundle and concurrently feeding same into the mold. Then, the composite product is shaped inside said mold and cured.

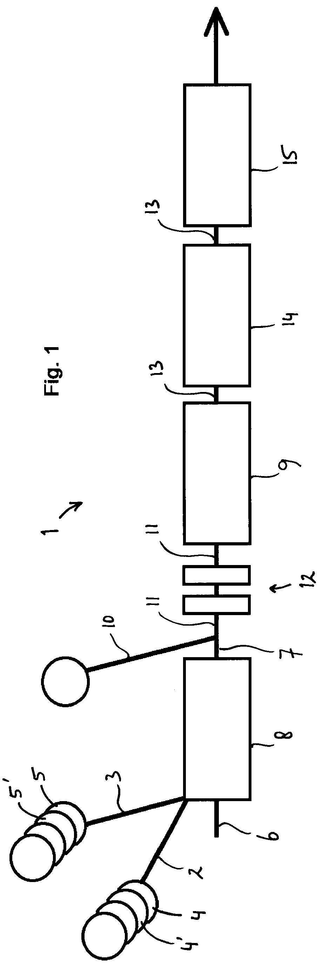

Hereafter, the invention will be described with reference t a drawing. The drawing shows in Fig. 1 a schematic flow diagram of an implementation of the method according to the invention.

For ease of understanding the figure, not all parts that are necessary for a practical embodiment are shown in the figure.

Fig. 1 shows a schematic flow diagram 1 of an implementation of the method according to the invention.

As shown in Fig. 1 a plurality of fibers 2, 3 are unwound from coils 4, 4', ..., 5, 5', ... and about a mandrel 6, so that a coiled shape 7 is obtained which is determined by the mandrel 6 and the nature of the winding. Fibers 2, 3 are fed through a resin bath 8 after coiling same about mandrel 6, so as to impregnate the coiled fibers 7 with said resin. For example, the resin may be pressed via said mandrel 6 through said coil 7 so as to impregnate the fibers with resin. The resin is a curable resin, for example a resin that may be cured by high temperature, UV radiation or by any other means. Mandrel 6 extends over a large part of the path the fibers are fed along, in any way until a position where curing of the resin has taken place in a curing station 9.

After the fibers have been impregnated with resin and are coiled around a mandrel 6 a non-woven material 10 is positioned around the coiled fibers 4. This yields a pre product 11 that is covered with said non-woven material 10. Since the non-woven material 10 is permeable to resin the non-woven material 10 is impregnated in a pre-form station 12 with resin. Depending on the product to be manufactured, a single or a plurality of stations 12 may be provided. As a result, the reflective objects (not shown in Fig. 1) to be adhered to the non-woven material 10 are incorporated into the resin as well.

After the non-woven material 10 has been impregnated with resin, together with the coiled fibers 4, such that the reflective are incorporated into the resin, the coated pre-product 11 is fed into a curing station 9 for curing said resin. Thus, a cured shaped product 13 is obtained. The product 13 is then pulled through a pulling station 14 that is positioned after said curing station and fed to an optional cutting device 15. Said cutting device 15 may shorten the shaped product 13 to predetermined lengths.

The reflective objects are applied to the non-woven material 10 by using a carrier or a vehicle. In practice, such vehicle will be compatible with the resin the fibers 2, 3; 4 are impregnated with. Here, the same resin may be used as a vehicle. For example, the vehicle and the resin are mutually soluble or miscible. As a consequence, the final cured product 13 will have a consistent composition.

The reflective objects may be applied to the non-woven material 10 y means of a screen printing technique, by applying a viscous carrier. Here also, the vehicle may be the same material as the resin. The reflective objects may also be applied to the non-woven material 10 by means of an offset cylinder and a highly viscous vehicle. As another example, the reflective objects may be applied to the non-woven material 10 by means of a spraying device using a liquid vehicle.

The invention is not limited to the embodiments mentioned above. The invention is limited only by the appending claims.

The invention also relates to all combinations of features that have been described here independently.

## Claims

1. A method for manufacturing a pultruded product, comprising the steps of impregnating fibers with a curable resin, guiding said impregnated fibers through a mold for obtaining a molded product and curing said resin of said molded product,
**characterized in that** the method further comprises the step of applying reflective objects to a non-woven material and at least partly coating the impregnated fibers that are to be guided through said mold with said non-woven material, in order to obtain a pultruded product comprising resin impregnated non-woven material with reflective objects at at least part of its surface.

2. A method according to claim 1, said reflective objects being applied to said non-woven material by using a carrier.

3. A method according to claim 1 of 2, said reflective objects being applied to said non-woven material by a screen printing technique with a viscous vehicle.

4. A method according to claim 1 of 2, said reflective objects being applied to said non-woven material by using an offset cylinder and a highly viscous carrier.

5. A method according to claim 1 of 2, said reflective objects being applied to said non-woven material by using a spraying device and a liquid carrier.

6. A method according to any of the preceding claims, comprising the step of curing said composite product in the mold.

7. A method according to claim 4, the carrier and the reflective objects each separately being applied on the plate cylinder and concurrently being transferred to the offset cylinder.

8. A method according to any of the preceding claims, comprising the step of combining curable resin impregnated fibers and reflective objects coated non-woven material under pressure, so as to impregnate the non-woven material and the reflective objects coated thereon with said curable resin.

9. A method according to any of the preceding claims, said reflective objects comprising retro-reflective objects.

10. A method according to any of the preceding claims, said reflective objects comprising substantially spherical objects.

11. A method according to any of the preceding claims, said method comprising the step of manufacturing in a mold an at least partly hollow spherical body, said body comprising reflective objects at an outer surface.

12. A method according to any of the preceding claims, said curable resin yielding an at least partly transparent material after curing same, preferably a material with a transparency of at least 30% for at least part of the visible light spectrum, more preferably at least 50%, still more preferably at least 70%.

13. A pultruded product obtained with a method according to any of the preceding claims, comprising fibers that are impregnated with a cured resin and wherein an outer surface of said product comprises a non-woven material that has been impregnated with said cured resin and that is provided with reflective objects that have been incorporated into said resin.
